# EUROPÄISCHE PATENTSCHRIFT

(11) **EP 2 441 547 B1**
(45) Veröffentlichungstag und Bekanntmachung des Hinweises auf die Patenterteilung: **29.10.2014**
(21) Anmeldenummer: 11160204.1
(22) Anmeldetag: 29.03.2011
(51) Int. Cl.: B23K 26/38, B23K 26/30, B23K 37/04, B23Q 7/08

(54) **Verfahren zum Trennen von Gutteilen und Restgitter beim Laserschneiden einer Blechtafel**
Method of separating finished parts and sheet chutes after laser cutting a sheet panel
Procédé de séparation de pièces découpées et chutes lors de la découpe au laser d'une tôle

(30) Priorität: 18.10.2010 DE 102010042561
(43) Veröffentlichungstag der Anmeldung: 18.04.2012
(73) Patentinhaber: TRUMPF Werkzeugmaschinen GmbH + Co. KG, 71254 Ditzingen (DE)
(72) Erfinder: Wahl, Eberhard, 73235 Weilheim (DE); Blaser, Martin, 88267 Vogt (DE); Petera, Martin, 71065 Sindelfingen (DE); Schmid, Hans-Jörg, 70839 Gerlingen (DE)
(74) Vertreter: Kohler Schmid Möbus

(56) Entgegenhaltungen:
- WO-A1-2007/134631
- JP-A- 5 127 721
- JP-A- 2002 337 040
- US-A1- 2004 016 731

## Beschreibung

Die Erfindung betrifft ein Verfahren zum Trennen von beim Laserschneiden einer Blechtafel anfallenden Gutteilen aus einem Restgitter der Blechtafel gemäß Oberbegriff von Patentanspruch 1.

Ein derartiges Trennverfahren ist beispielsweise aus der JP 2002 337040 A bekannt geworden.

Beim Laserschneiden von Blechtafen wird die zu bearbeitende Blechtafel maschinell oder manuell auf die Werkstückauflage aufgelegt und dann nach dem Laserschneiden mitsamt den über Microjoints noch verbundenen Gutteilen manuell von der Werkstückauflage abgehoben. Das Austrennen der Gutteile aus dem Restgitter erfolgt manuell, vorteilhaft durch Ausklopfen der Gutteile. Dabei darf die Blechtafel allerdings eine bestimmte Fläche und ein bestimmtes Gewicht nicht überschreiten, damit der Maschinenbediener die Blechtafel von der Werkstückauflage noch abheben kann. Bei dem bekannten Trennverfahren können die Gutteile durch ihre Auflage auf den Auflageelementen der Werkstückauflage verkratzt werden, was die Teilequalität mindert und bei hohen Qualitätsanforderungen oft aufwändige Nacharbeiten erforderlich macht.

Bei dem aus der JP 2002 337040 A bekannten Trennverfahren wird das Restgitter in mehrere Restgitterteile zerschnitten, sofern in einem vorgegebenen Längsstreifen der Blechtafel nach dem Ausschneiden der noch über Mikrojoints verbundenen Gutteile noch ein durchgehender gerader Laserschnitt möglich ist.

Aus der US 2004/016731 A1 ist eine aus mehreren höhenverstellbaren Auflageelementen gebildete Werkstückauflage bekannt, wobei die den auszuschneidenden Gutteilen zugeordneten Auflageelemente höher als die dem verbleibenden Restgitter zugeordneten Auflageelemente angeordnet werden.

Aus der WO 2007/134631 A1 ist eine aus mehreren Tragpunktspitzen gebildete Werkstückauflage bekannt, wobei in Abhängigkeit der Flächengeometrie des auszuschneidenden Gutteils und dem Verlauf des Schneidspalts die Lage und Anzahl der Tragpunktspitzen ermittelt werden.

Demgegenüber ist es die Aufgabe der vorliegenden Erfindung, das eingangs genannte Trennverfahren dahingehend weiterzubilden, dass auch manuell nicht handhabbare Blechtafeln bearbeitet werden können und die Gutteile bei der Bearbeitung möglichst nicht beschädigt werden.

Diese Aufgabe wird erfindungsgemäß durch ein Verfahren mit den Merkmalen von Anspruch 1 gelöst.

Erfindungsgemäß wird also nach dem Laserschneiden der Gutteile die Blechtafel durch einen oder mehrere Trennschnitte in kleinere Blechtafelteile geschnitten, die vom Maschinenbediener bequem gehandhabt werden können. Der zwischen den Blechtafelteilen auszuführende Trennschnitt wird dabei derart gestaltet, dass ein, mehrere oder alle Restgitterteile der Blechtafelteile an ihren trennschnittseitigen Gitterrändern auch weiterhin durch die in diesem Bereich vorgesehenen Auflageelemente abgestützt bleiben. Die Anordnung der Auflageelemente und die Belegung der Blechtafel mit den zu schneidenden Gutteilen werden derart aufeinander abgestimmt, dass die aufgelegte Blechtafel nur im Bereich des Restgitters durch die Auflageelemente abgestützt wird. Dadurch ist bei allen Gutteilen ein Verkratzen durch die Werkstückauflage ausgeschlossen. Auf diese Weise ist zum einen eine optimale Unterstützung der einzelnen Blechtafelteile gewährleistet, wodurch eine Beschädigung der Gutteile durch Abkippen der Blechtafelteile von der Werkstückauflage sicher verhindert wird, und zum anderen ist gewährleistet, dass keine Auflageelemente die Gutteile abstützen und dadurch Kratzerbildung vermieden wird bei gleichzeitig geringem Verschnitt, wodurch die Teilequalität beträchtlich erhöht wird. Vorzugsweise verläuft der mindestens eine Trennschnitt vollständig im Restgitter. Es ist aber auch möglich, dass der Trennschnitt abschnittweise durch den Schnitt eines Gutteils gebildet ist.

Vorzugsweise wird der Trennschnitt innerhalb einer Trenngasse ausgeführt, die im Restgitter beabstandet zu den Gutteilen verläuft und bereits bei der Belegung der Blechtafel mit den zu schneidenden Gutteilen auf der Blechtafel freigelassen wird. Die Trenngasse wird vorzugsweise so breit ausgeführt, dass der Trennschnitt mit ausreichend Abstand zu den Auflageelementen und zu den Gutteilen ausgeführt werden kann, damit weder die Gutteile noch die Restgitterteile durch den den Trennschnitt ausführenden Laserstrahl mit den Auflageelementen verbacken oder sonst wie beschädigt werden.

Wenn entlang des Trennschnitts die Auflageelemente doppelreihig vorgesehen sind, z.B. entlang zweier Auflagestege, kann der Trennschnitt zwischen den beiden Reihen - ggf. sogar gerade -ausgeführt werden, so dass die durch den Trennschnitt voneinander getrennten Blechtafelteile jeweils auf einer Reihe von Auflageelementen aufliegen. Zur Minimierung des Verschnitts ist allerdings entlang des Trennschnitts nur eine Reihe von Auflageelementen zu bevorzugen. In diesem Fall verläuft der Trennschnitt bevorzugt zackenförmig, insbesondere zickzack-, sägezahn- oder wellenförmig, damit die Blechtafelteile auf den Auflageelementen aufliegen bleiben.

Für eine gewünschte Anordnung der Auflageelemente werden bevorzugt gezielt nur einige von mehreren höhenbeweglichen Auflageelementen in der Ebene der Werkstückauflage angeordnet, beispielsweise durch Hochfahren von vertikal verfahrbaren Auflageelementen oder durch Hochklappen von umklappbaren Auflageelementen. Alternativ kann der Arbeitstisch der Laserbearbeitungsmaschine auch gezielt mit Auflageelementen bestückt werden.

Wenn bei einer Werkstückauflage die möglichen Abstände (Raster) der anordnenbaren Auflageelemente zueinander fest vorgegeben sind, wird die Belegung der Blechtafel mit den zu schneidenden Gutteilen bevorzugt in Abhängigkeit von den Auflageelementen gewählt.

Vorzugsweise werden die Blechtafelteile von der Werkstückauflage manuell entnommen. Hierfür dürfen die einzelnen Blechtafelteile eine bestimmte Fläche und ein bestimmtes Gewicht nicht überschreiten, und außerdem sollten ihre Längenabmessungen einen bestimmten Wert nicht überschreiten.

Weitere Vorteile und vorteilhafte Ausgestaltungen des Gegenstands der Erfindung sind der Beschreibung, der Zeichnung und den Ansprüchen entnehmbar. Ebenso können die vorstehend genannten und die noch weiter aufgeführten Merkmale erfindungsgemäß jeweils einzeln für sich oder zu mehreren in beliebigen Kombinationen Verwendung finden. Die gezeigten und beschriebenen Ausführungsformen sind nicht als abschließende Aufzählung zu verstehen, sondern haben vielmehr beispielhaften Charakter für die Schilderung der Erfindung.

Es zeigen:
- Fig. 1: eine bekannte Laserbearbeitungsmaschine zum Laserschneiden von Blechtafeln;
- Fign. 2a-2c: die zeitliche Abfolge des erfindungsgemäßen Verfahrens beim Laserschneiden einer Blechtafel, wobei Fig. 2a die auf der Werkstückauflage der Laserbearbeitungsmaschine aufliegende Blechtafel und ihre Belegung mit zu schneidenden Gutteilen, Fig. 2b die auf der Werkstückauflage aufliegende Blechtafel mit den geschnittenen Gutteilen und Fig. 2c die auf der Werkstückauflage aufliegende Blechtafel, die in vier Blechtafelabschnitte zerschnitten ist, zeigen;
- Fig. 3: ein weiteres Ausführungsbeispiel für das Zerschneiden einer auf der Werkstückauflage aufliegenden Blechtafel in vier Blechtafelabschnitte;
- Fig. 4: ein anderes Beispiel gemäß Figur 3, das nicht die Erfindung darstellt und
- Fig. 5: das erfindungsgemäße Verfahren in Form eines Ablaufdiagramms.

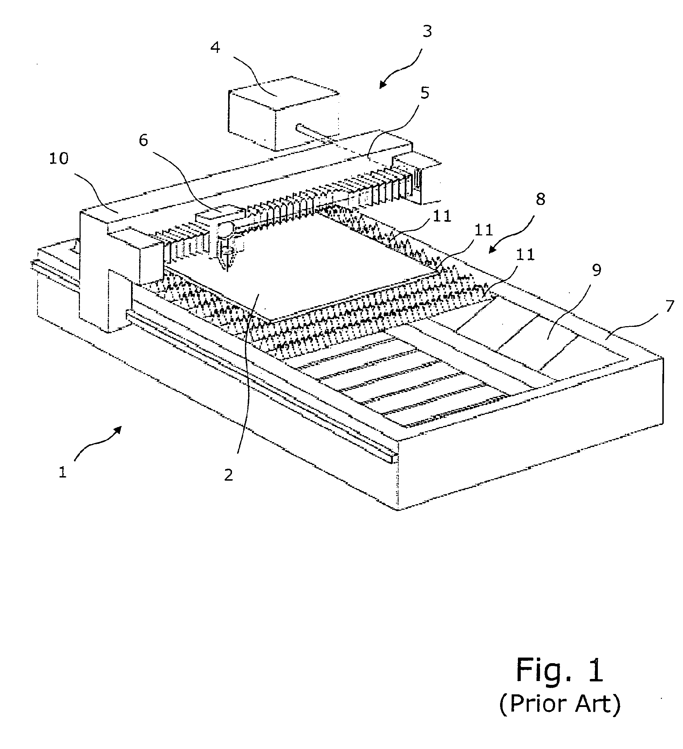

**Fig. 1** zeigt eine als "TruLaser" bekannte Laserbearbeitungsmaschine **1** zum Laserschneiden von plattenförmigen Werkstücken **2**, die als Blechtafeln bezeichnet werden. Die Laserbearbeitungsmaschine 1 umfasst eine Schneidvorrichtung **3** mit einem Lasergerät **4**, einer externen Strahlführung **5** und einem Bearbeitungskopf **6**, sowie einen Arbeitstisch **7** mit einer Werkstückauflage **8**. Über eine Absaugeinrichtung **9**, die im Arbeitstisch 7 angebracht ist, werden während des Laserschneidens Schneidrauch, Schlackepartikel und kleine Abfallteile abgesaugt. Der Bearbeitungskopf 6 ist an einem Querträger **10** angebracht und in einer Ebene parallel zu der Werkstückauflage 8 verfahrbar ausgebildet. Im gezeigten Ausführungsbeispiel ist der Bearbeitungskopf 6 in einer Richtung senkrecht zu der Blechtafel 2 nicht höhenverfahrbar ausgebildet, und eine Änderung der Fokuslage wird über optischen Elemente im Bearbeitungskopf 6, z.B. eine adaptive Optik, eingestellt. Alternativ kann der Bearbeitungskopf 6 für eine Änderung der Fokuslage in einer Richtung senkrecht zu der Werkstückauflage 8 höhenverfahrbar ausgebildet sein.

Die Werkstückauflage 8 ist durch eine Vielzahl von Auflageelementen **11** mit vorzugsweise dreieckig ausgebildeten Tragpunktspitzen gebildet, die eine Auflageebene für die zu bearbeitende Blechtafel 2 definieren. Die Auflageelemente 11 sind in einem vorbestimmten Raster angeordnet und können einzeln oder entlang einer Leiste nach unten umgeklappt oder nach unten verfahren werden, um die Blechtafel 2 nicht abzustützen.

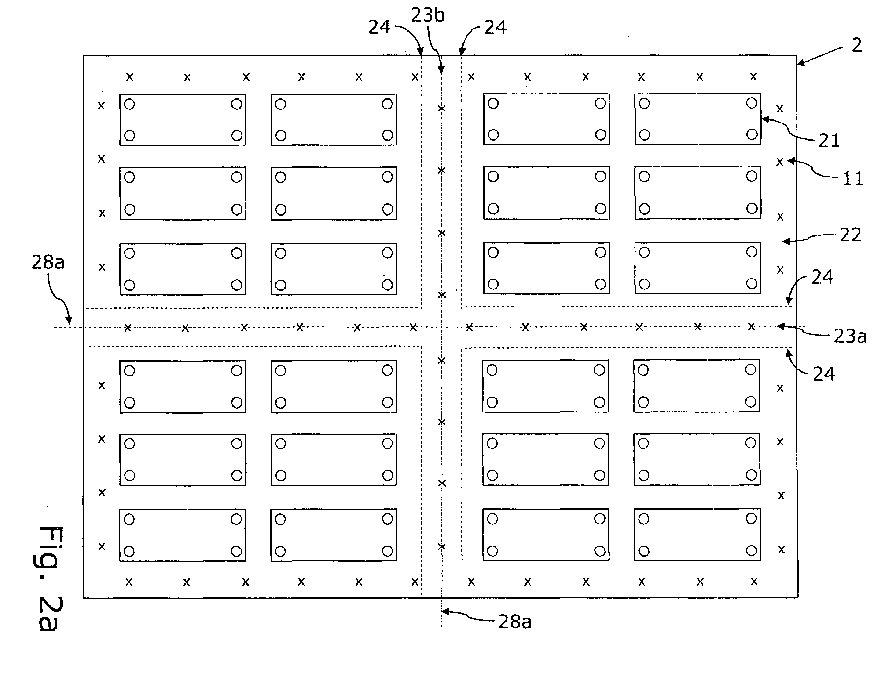

**Fig. 2a** zeigt eine auf der Werkstückauflage 8 der in Fig. 1 gezeigten Laserbearbeitungsmaschine 1 aufliegende Blechtafel 2, aus der mehrere Gutteile **21** ausgeschnitten und aus dem verbleibenden Restgitter **22** der Blechtafel 2 getrennt werden sollen. Die Blechtafel 2 liegt auf den mit Kreuzen angedeuteten Auflageelementen 11 1 der Werkstückauflage 8 auf. Die Anordnung der Auflageelemente 11 und die Belegung der Blechtafel 2 mit den zu schneidenden Gutteilen 21 sind dabei derart aufeinander abgestimmt, dass die Blechtafel 2 gemäß der Erfindung ausschließlich im Bereich des Restgitters 22 auf den Auflageelementen 11 abgestützt ist. Wenn die möglichen Abstände, also das Raster, der anordnenbaren Auflageelemente 11 zueinander fest vorgegeben ist, wird vorzugsweise die Belegung der Blechtafel 2 mit den zu schneidenden Gutteilen 21 an das Raster der Auflageelemente 11 derart angepasst, dass die Blechtafel 2 gemäß der Erfindung ausschließlich im Bereich des Restgitters 22 auf den Auflageelementen 11 aufliegt.

Im gezeigten Ausführungsbeispiel sollen 24 identische Gutteile 21 geschnitten werden, die in vier Spalten und sechs Zeilen angeordnet sind. Der Zeilenabstand zwischen der dritten und vierten Zeile ist durch eine dort zusätzlich eingefügte horizontale Trenngasse **23a** und der Spaltenabstand zwischen der zweiten und dritten Spalte durch eine dort zusätzlich eingefügte vertikale Trenngasse **23b** vergrößert, deren seitliche Ränder jeweils mit gestrichelten Linien **24** dargestellt sind.

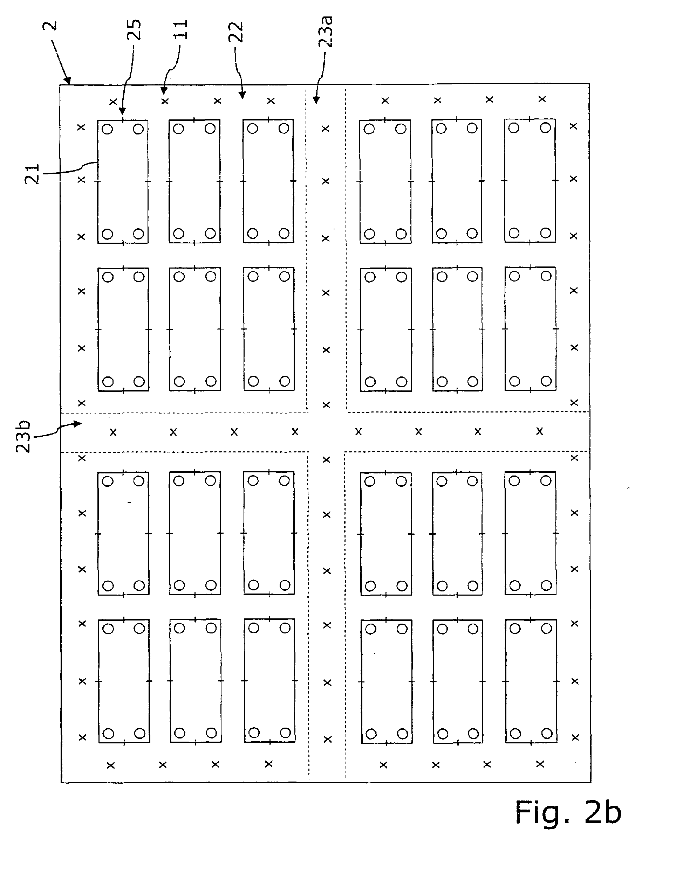

**Fig. 2b** zeigt die Blechtafel 2 nach dem Laserschneiden der Gutteile 21, die über so genannte Microjoints (Verbindungsstege) **25** noch im Restgitter 22 festgehalten sind.

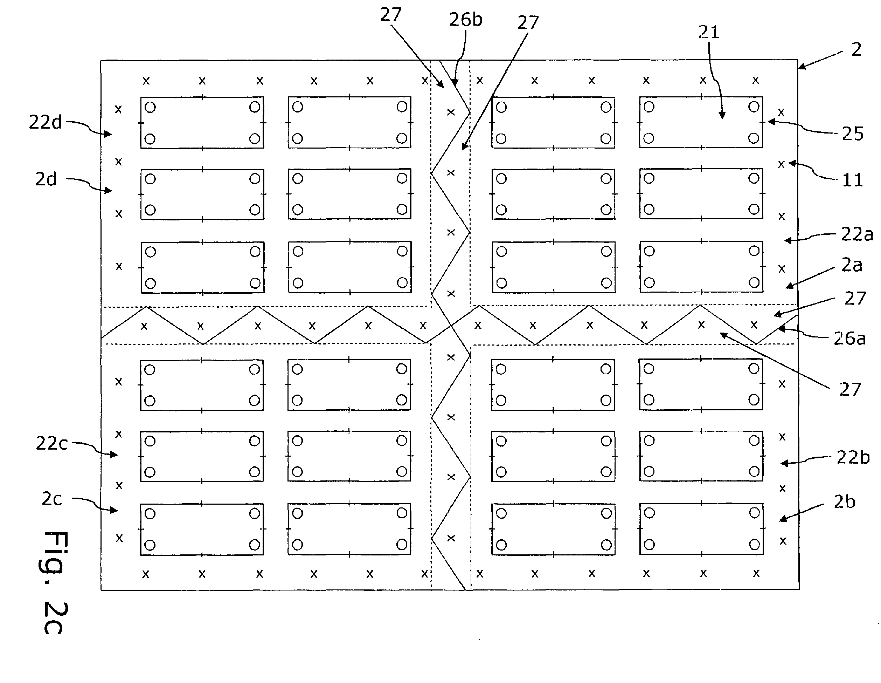

Anschließend wird die Blechtafel 2, wie in **Fig. 2c** gezeigt, mittels zweier im Restgitter 22 verlaufender Trennschnitte **26a, 26b** in vier kleinere Blechtafelteile **2a-2d** zerschnitten, die aufgrund ihres geringeren Gewichts und ihrer kleineren Abmessungen vom Maschinenbediener einfacher bzw. erst jetzt gehandhabt werden können. Um eine sichere Unterstützung der Blechtafelteile 2a-2d nach dem Trennen zu gewährleisten, müssen im Bereich der Trennschnitte 26a, 26b Auflageelemente 11 vorgesehen sein, welche die vier Blechtafelabschnitte 2a-2d ausreichend abstützen. Jeder Trennschnitt 26a, 26b wird daher derart gestaltet, dass die Restgitterteile **22a-22d** der durch den Trennschnitt 26a, 26b voneinander getrennten Blechtafelteile 2a-2d jeweils an ihren trennschnittseitigen Gitterrändern **27** weiterhin auf mindestens einem Auflageelement 11 abgestützt bleiben. Für einen minimalen Verschnitt ist im Allgemeinen entlang der Trennschnitte 26a, 26b jeweils nur eine Reihe von Auflageelementen 11 angeordnet. In diesem Fall verläuft der Trennschnitt 26a, 26b zickzackförmig (oder auch sägezahn- oder wellenförmig) zwischen den Auflageelementen 11, die dadurch abwechselnd das eine und das andere Blechtafelteil weiterhin abstützen. Die Blechtafelteile 2a-2d werden dann einzeln von der Werkstückauflage 8 manuell entnommen, und anschließend werden die Gutteile 21, die während der gesamten Bearbeitung nicht mit den Auflageelementen 11 in Berührung gekommen sind, manuell aus dem jeweiligen Restgitterteil 22a-22d herausgebrochen. Das beschriebene Verfahren ermöglicht eine maximale Teilequalität bei gutem Handling und minimalem Verschnitt.

Wie in Fig. 2a angedeutet, können bei der Belegung der Blechtafel 2 mit den zu schneidenden Gutteilen 21 eine erste, hier waagerecht verlaufende Hilfslinie **28a** und eine zweite, hier senkrecht verlaufende Hilfslinie **28b** die Blechtafel 2 in vier Blechtafelabschnitte unterteilen. Die Hilfslinien 28a, 28b sind so angeordnet, dass diese vier Blechtafelabschnitte hinsichtlich ihrer Fläche, ihres Gewichtes sowie ihrer Längen-und Breitenabmessungen für einen Maschinenbediener handhabbar sind und daher einzeln von der Werkstückauflage 8 entnommen werden können, um die Gutteile 21 herauszutrennen. Die Gutteile 21 sind so auf diesen vier Blechtafelabschnitten angeordnet, dass im Bereich der Hilfslinien 28a, 28b die Trenngassen 23a, 23b entstehen. Die Trenngassen 23a, 23b stellen bereits bei der Belegung den Bereich der Blechtafel 2 dar, in dem die Trennschnitte 26a, 26b angeordnet werden.

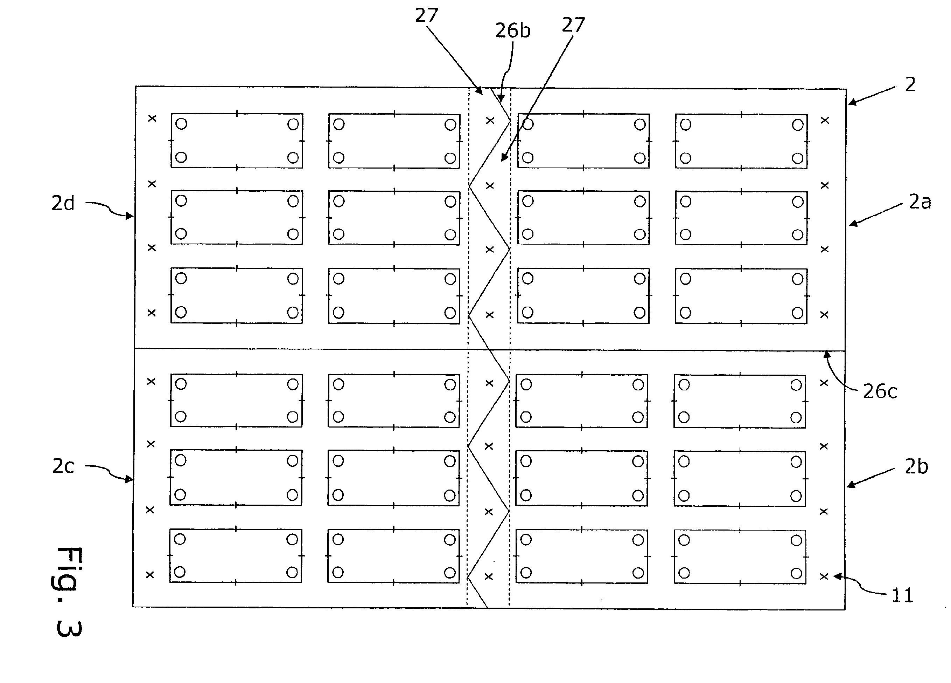

**Fig. 3** zeigt eine Blechtafel 2, die mittels eines konventionellen Trennschnitts **26c** und eines erfindungsgemäßen Trennschnitts 26b analog zu Fig. 2c in vier Blechtafelteile 2a-2d geteilt wurde, wobei die Auflageelemente 11 entlang dreier Spalten, z.B. entlang von drei Auflageleisten, angeordnet sind. Auch hierbei verläuft der Trennschnitt 26b so, dass die Blechtafelteile 2a-2d entlang der erfindungsgemäßen, trennschnittseitigen Gitterränder 27 auf mindestens einem Auflageelement 11 aufliegen. Dabei wird Sorge getragen dafür, dass der Schwerpunkt jedes Blechtafelteils 2a-2d innerhalb der durch die zum jeweiligen Blechtafelteil 2a-2d gehörigen Auflageelemente 11 gebildeten, vieleckigen Fläche liegt, wodurch die Blechtafelteile 2a-2d nicht kippen können und somit stabil aufliegen.

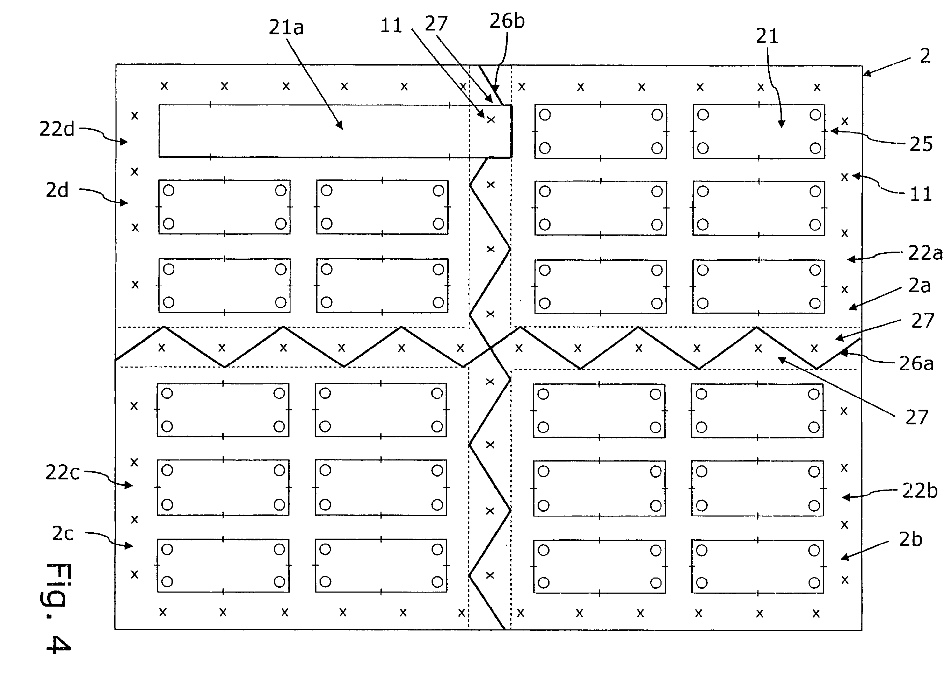

**Fig. 4**, die nicht im Gegenstand der Erfindung steht, zeigt eine Blechtafel 2, die mittels zweier Trennschnitte 26a, 26b analog zu Fig. 2c in vier Blechtafelteile 2a-2d geteilt wurde. Anders als in Fig. 2 liegt hier das Blechtafelteil 2d im Bereich des Trennschnitts 26b nicht nur mit den gezackten Rändern 27 seines Restgitterteils 22d, sondern auch mit seinem geschnittenen, microverbundenen Gutteil **21a** auf einem Auflageelement 11 auf. Außerdem verläuft der eine Trennschnitt 26b nicht vollständig im ursprünglichen Restgitter 22, sondern ist abschnittsweise durch den Schnitt des Gutteils 21 a gebildet.

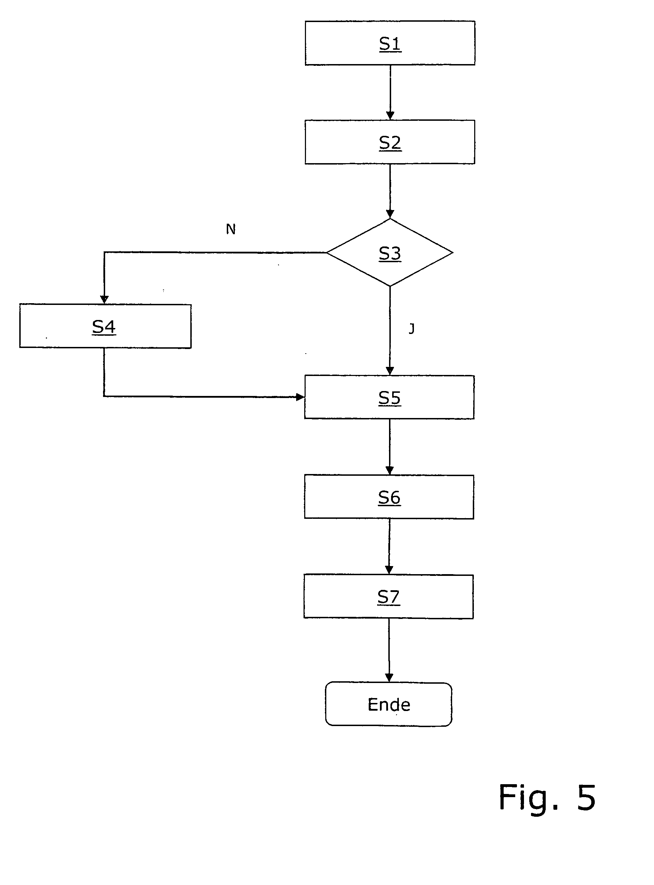

In **Fig. 5** ist das erfindungsgemäße Verfahren in Form eines Ablaufdiagramms gezeigt.

In einem Schritt **S1** erfolgt eine Schachtelung bzw. die Belegung der zu schneidenden Gutteile 21 auf der Blechtafel 2 nach einer bekannten Schachtelstrategie, wie z.B. durch Rechteckschachteln oder freies Geometrieschachteln. Die Blechtafel 2 wird in einem Schritt **S2** über die zwei Hilfslinien 28a, 28b in insgesamt vier Blechtafelabschnitte unterteilt. Dabei kann die Unterteilung automatisch vom Programmiersystem durchgeführt oder manuell vom Programmierer vorgenommen werden. Abhängig von der Tafelbelegung kann es erforderlich sein, die Gutteile 21 auf der Blechtafel 2 zu verschieben, so dass im Bereich der Hilfslinien 28a, 28b die Trenngassen 23a, 23b entstehen, in denen der Trennschnitt 26a. 26b verlaufen kann. In einem Schritt **S3** wird überprüft, ob im Bereich der Hilfslinien 28a, 28b ausreichend Platz für die Trenngassen 23a, 23b vorhanden ist. Wenn der Platz im Bereich der Hilfslinien 28a, 28b nicht ausreicht, um Trenngassen mit der erforderlichen Breite anzuordnen (N in Schritt S3), werden die Gutteile 21 in einem Schritt **S4** so auf der Blechtafel 2 verschoben, dass im Bereich der Hilfslinien 28a, 28b Trenngassen 23a, 23b mit der erforderlichen Breite entstehen. Nach Schritt S4 oder wenn im Bereich der Hilfslinien 28a, 28b ausreichend Platz für Trenngassen besteht (J in Schritt S3), werden in einem Schritt **S5** die Auflageelemente 11 auf dem Arbeitstisch 7 dort angeordnet, wo die Hilfslinien 28a, 28b verlaufen. Nach dem Laserschneiden der Gutteile 21 (Schritt S6) werden in den Trenngassen 23a, 23b zwischen den vier Blechtafelabschnitten die Trennschnitte 26a, 26b erzeugt (Schritt **S7**), welche die Blechtafel 2 in die kleineren Blechtafelteile 2a-2d unterteilen. Dabei wird jeder Trennschnitt 26a, 26b so in der Trenngasse 23a, 23b positioniert, dass der Trennschnitt 26a, 26b zu jedem Auflageelement 11 einen Mindestabstand einhält, um eine Beschädigung der Auflageelemente 11 durch den Laserstrahl zu verhindern.

## Patentansprüche

1. Verfahren zum Trennen von beim Laserschneiden einer Blechtafel (2) anfailenden Gutteilen (21) aus einem Restgitter (22) der Blechtafel (2),
wobei die geschnittenen Gutteile (21) über Microjoints (25) noch mit dem Restgitter (22) verbunden sind und wobei nach dem Laserschneiden der Gutteile (21) die Blechtafel (2) durch mindestens einen zumindest teilweise im Restgitter (22) verlaufenden Trennschnitt (26a, 26b) in kleinere Blechtafelteile (2a-2d) zerschnitten wird,
**dadurch gekennzeichnet,**
**dass** die Blechtafel (2) auf einer Werkstückauflage (8), welche durch mehrere Auflageelemente (11) gebildet ist, aufliegt,
**dass** der Trennschnitt (26a, 26b) derart gestaltet wird, dass mindestens eines der Restgitterteile (22a-22d) der durch den Trennschnitt (26a, 26b) voneinander getrennten Blechtafelteile (2a-2d) an seinem trennschnittseitigen Gitterrand (27) auf mindestens einem Auflageelement (11) abgestützt bleibt, und dass die Anordnung der Auflageelemente (11) und die Belegung der Blechtafel (2) mit den zu schneidenden Gutteilen (21) derart aufeinander abgestimmt werden, dass die aufgelegte Blechtafel (2) nur im Bereich des Restgitters (22) durch die Auflageelemente (11) abgestützt wird.

2. Verfahren nach Anspruch 1, **dadurch gekennzeichnet, dass** der Trennschnitt (26a, 26b) derart gestaltet wird, dass die Restgitterteile (22a-22d) der durch den Trennschnitt (26a, 26b) voneinander getrennten Blechtafelteile (2a-2d) jeweils an ihren trennschnittseitigen Gitterrändern (27) auf mindestens einem Auflageelement (11) abgestützt bleiben.

3. Verfahren nach Anspruch 1 oder 2, **dadurch gekennzeichnet, dass** der mindestens eine Trennschnitt (26a, 26b) vollständig im Restgitter (22) verläuft.

4. Verfahren nach einem der vorhergehenden Ansprüche, **dadurch gekennzeichnet, dass** der Trennschnitt (26a, 26b) innerhalb einer Trenngasse (23a, 23b) ausgeführt wird, die im Restgitter (22) zwischen den Gutteilen (21) freigelassen ist.

5. Verfahren nach einem der vorhergehenden Ansprüche, **dadurch gekennzeichnet, dass** der Trennschnitt (26a, 26b) zickzack-, sägezahn- oder wellenförmig verläuft.

6. Verfahren nach einem der vorhergehenden Ansprüche, **dadurch gekennzeichnet, dass** für eine gewünschte Anordnung der Auflageelemente (11) gezielt nur einige von mehreren höhenbeweglichen Auflageelementen (11) in der Ebene der Werkstückauflage (8) angeordnet werden.

7. Verfahren nach einem der vorhergehenden Ansprüche, **dadurch gekennzeichnet, dass** die Belegung der Blechtafel (2) mit den zu schneidenden Gutteilen (21) in Abhängigkeit von den die Werkstückauflage (8) bildenden Auflageelementen (11) gewählt wird, oder umgekehrt.

8. Verfahren nach einem der vorhergehenden Ansprüche, **dadurch gekennzeichnet, dass** die Blechtafelteile (2a-2d) von der Werkstückauflage (8) manuell entnommen werden.

## Claims

1. Method for separating good parts (21), which accumulate during laser cutting of a sheet (2), from a sheet skeleton (22) of the sheet (2), wherein the cut good parts (21) are still connected to the sheet skeleton (22) via micro joints (25) and wherein, after laser cutting of the good parts (21), the sheet (2) is cut into smaller sheet parts (2a-2d) by at least one cut (26a, 26b) extending at least partially in the sheet skeleton (22),
**characterized in that**
the sheet (2) is supported on a workpiece support (8) which is formed by a plurality of supporting elements (11),
the cut (26a, 26b) is designed such that at least one of the sheet skeleton parts (22a-22d) of the sheet parts (2a-2d) separated from each other by the cut (26a, 26b) remains supported at its skeleton edge (27) on the side of the cut on at least one supporting element (11) and
the configuration of the supporting elements (11) and the occupation of the sheet (2) with the good parts (21) to be cut are matched in such a manner that the disposed sheet (2) is supported by the supporting elements (11) only in the region of the sheet skeleton (22).

2. Method according to claim 1, **characterized in that** the cut (26a, 26b) is designed in such a manner that the sheet skeleton parts (22a-22d) of the sheet parts (2a-2d) separated from each other by the cut (26a, 26b) each remain supported at their skeleton edges (27) on the side of the cut on at least one supporting element (11).

3. Method according to claim 1 or 2, **characterized in that** the at least one cut (26a, 26b) extends completely within the sheet skeleton (22).

4. Method according to any one of the preceding claims, **characterized in that** the cut (26a, 26b) is performed within a separating aisle (23a, 23b) which is left free between the good parts (21) in the sheet skeleton (22).

5. Method according to any one of the preceding claims, **characterized in that** the cut (26a, 26b) extends in a zigzag, saw tooth or wavy shape.

6. Method according to any one of the preceding claims, **characterized in that** only a few of a plurality of height-adjustable supporting elements (11) are specifically arranged in the plane of the workpiece support (8) in order to obtain a desired configuration of the supporting elements (11).

7. Method according to any one of the preceding claims, **characterized in that** occupation of the sheet (2) with the good parts (21) to be cut is selected in dependence on the supporting elements (11) forming the workpiece support (8) or vice versa.

8. Method according to any one of the preceding claims, **characterized in that** the sheet parts (2a-2d) are manually removed from the workpiece support (8).

## Revendications

1. Procédé pour séparer d'une chute (22) d'une feuille de tôle (2) les pièces finies (21) produites lors du découpage au laser de la feuille de tôle (2),
sachant que les pièces finies découpées (21) sont encore reliées à la chute (22) via des micro-joints (25) et sachant qu'à la suite du découpage au laser des pièces finies (21), la feuille de tôle (2) est découpée en parties de feuille de tôle plus petites (2a-2d) par au moins une coupe de séparation (26a, 26b) s'étendant au moins pour partie dans la chute (22),
**caractérisé en ce que** la feuille de tôle (2) repose sur un support de pièce (8) qui est formé par plusieurs éléments d'appui (11),
**en ce que** la coupe de séparation (26a, 26b) est configurée de telle sorte qu'au moins une des parties de chute (22a-22d) des parties de feuille de tôle (2a-2d) séparées les unes des autres par la coupe de séparation (26a, 26b) reste soutenue sur au moins un élément d'appui par son bord de chute (27) situé du côté de la coupe de séparation,
et **en ce que** la disposition des éléments d'appui (11) et l'occupation de la feuille de tôle (2) par les pièces finies (21) à découper sont mutuellement adaptées de telle sorte que la feuille de tôle (2) posée sur le support n'est soutenue par les éléments d'appui (11) que dans la région de la chute (22).

2. Procédé selon la revendication 1, **caractérisé en ce que** la coupe de séparation (26a, 26b) est configurée de telle sorte que les parties de chute (22a-22d) des parties de feuille de tôle (2a-2d) séparées les unes des autres par la coupe de séparation (26a, 26b) restent respectivement soutenues sur au moins un élément d'appui (11) par leurs bords de chute (27) situés du côté de la coupe de séparation.

3. Procédé selon la revendication 1 ou 2, **caractérisé en ce que** la coupe de séparation au moins unique (26a, 26b) s'étend en totalité dans la chute (22).

4. Procédé selon l'une des revendications précédentes, **caractérisé en ce que** la coupe de séparation (26a, 26b) est réalisée à l'intérieur d'un couloir de séparation (23a, 23b) qui est laissé libre entre les pièces finies (21) dans la chute (22).

5. Procédé selon l'une des revendications précédentes, **caractérisé en ce que** la coupe de séparation (26a, 26b) s'étend en zigzag, en dents de scie ou de marnière ondulée.

6. Procédé selon l'une des revendications précédentes, **caractérisé en ce que**, pour une disposition souhaitée des éléments d'appui (11), seuls certains de plusieurs éléments d'appui (11) verticalement mobiles sont volontairement disposés dans le plan du support de pièce (8).

7. Procédé selon l'une des revendications précédentes, **caractérisé en ce que** l'occupation de la feuille de tôle (2) par les pièces finies (21) à découper est choisie en fonction des éléments d'appui (11) formant le support de pièce (8), ou vice versa.

8. Procédé selon l'une des revendications précédentes, **caractérisé en ce que** les parties de feuille de tôle (2a-2d) sont retirées manuellement du support de pièce (8).
